# EUROPÄISCHE PATENTANMELDUNG

(11) **EP 4 159 401 A1**
(43) Veröffentlichungstag der Anmeldung: **05.04.2023**
(21) Anmeldenummer: 22198014.7
(22) Anmeldetag: 27.09.2022
(51) Int. Cl.: B29C 45/00, B29C 45/26, B29B 11/08, B29B 11/14, B29C 49/00, B29C 33/42, B29K 105/00

(54) **VERFAHREN ZUM HERSTELLEN EINES VOR-FORMLINGS UND VOR-FORMLING**

(30) Priorität: 01.10.2021 DE 102021125486
(71) Anmelder: Optipack GmbH, 01454 Leppersdorf (DE)
(72) Erfinder: BÖHME, Thomas, 02692 Großpostwitz (DE); SCHMIDT, René, 01917 Kamenz (DE)
(74) Vertreter: Seranski, Klaus

(57) **Zusammenfassung**

Verfahren zum Herstellen eines Formlings für einen zum Aufnehmen von flüssigen oder pastösen Lebensmittels ausgelegten Kunststoff-Behälter, insbesondere Kunststoff-Flasche, bei dem fließfähiger Kunststoff, wie etwa erwärmtes PET und/oder erwärmtes PS, in eine die Form eines einen umlaufenden Mantel aufweisenden Vor-Formlings bestimmende Kavität eines Spritzgießwerkzeugs eingespritzt wird und in der Kavität von einem Einspritzpunkt des Spritzgießwerkzeugs in einer Fließrichtung durch einen die Form des Mantels bestimmenden, eine Spaltachse umlaufenden Ringspalt zu einem dem Einspritzpunkt entgegengesetzten Ende der Kavität fließt, dadurch gekennzeichnet, dass der fließfähige Kunststoff zur Bildung von Stegen des Mantels durch mindestens eine sich in Fließrichtung erstreckende, die radiale Weite des Ringspalts lokal vergrößernde Fließrinne in Richtung auf das dem Einspritzpunkt abgewandte Ende der Kavität fließt.

## Beschreibung

Die Erfindung betrifft ein Verfahren zum Herstellen eines Vor-Formlings für einen zum Aufnehmen von flüssigen oder pastösen Lebensmitteln ausgelegten Kunststoff-Behälter, insbesondere für eine Kunststoff-Flasche, bei dem fließfähiger Kunststoff, wie etwa erwärmtes PET (Polyethylenterephthalat) und/oder erwärmtes PS (Polystyrol), in eine die Form eines einen umlaufenden Mantel aufweisenden Vor-Formlings bestimmende Kavität eines Spritzgießwerkzeugs eingespritzt wird und in der Kavität von einem Einspritzpunkt des Spritzgießwerkzeugs in einer Fließrichtung durch einen die Form des Mantels bestimmenden, eine Spaltachse umlaufenden Ringspalt zu einem dem Einspritzpunkt entgegengesetzten Ende der Kavität fließt.

Derartige Verfahren werden beispielsweise im Rahmen der Herstellung von zum Aufnehmen von Milchprodukten ausgelegten Flaschen eingesetzt. Dabei kann die Flasche einen im wesentlichen kreiszylinderförmigen Mantel oder einen Mantel mit polygonalem Querschnitt, wie etwa quadratischem Querschnitt, aufweisen. Entsprechend weist auch der Ringspalt des zum Herstellen des Vor-Formlings eingesetzten Spritzgießwerkzeugs einen kreiszylindermantelförmigen Bereich oder einen polygonalen Querschnitt auf.

Der mit diesen bekannten Verfahren hergestellte Vor-Formling kann zur Fertigstellung des Lebensmittelbehälters einem Blasformvorgang unterzogen werden, bei dem ein Fluid, wie etwa ein Gas, insbesondere Luft, unter Druck in den auf eine eine Verformung ermöglichende Temperatur vorgewärmten Vor-Formling eingeleitet wird. Dabei erfährt der Vor-Formling regelmäßig sowohl eine axiale Dehnung als auch eine Streckung in Umfangsrichtung. Die axiale Dehnung des Vor-Formlings kann mit einem in den Vor-Formling eingesetzten Werkzeug unterstützt werden. Bei den herkömmlichen zweistufigen Verfahren, bei denen zunächst mit einem Spritzgießvorgang ein Vor-Formling hergestellt und dieser anschließend einem Blasformvorgang unterzogen wird, werden Bereiche des Endprodukts, welche eine besondere Maßhaltigkeit aufweisen müssen, wie etwa Gewindeabschnitte von Kunststoff-Flaschen, welche das Aufschrauben eines Gewindeverschlusses ermöglichen sollen, schon während des Spritzgießvorgangs erzeugt und bleiben bei dem anschließenden Blasformvorgang im Wesentlichen unverändert. Die zur Herstellung eines Behälters mit vorgegebenem Volumen erforderliche Materialmenge hängt von vielen Parametern, wie etwa der Fließfähigkeit, der Streckgrenze und dergleichen ab.

Der Erfindung liegt die Aufgabe zugrunde, Verfahren zur Herstellung von Vor-Formlingen für Lebensmittelbehälter aus Kunststoff bereitzustellen, mit denen die Menge des zur Herstellung eines Behälters mit einem vorgegebenen Volumen benötigten Materials unter Sicherstellung der erforderlichen Maßhaltigkeit und Stabilität des Behälters reduziert werden kann.

Erfindungsgemäß wird diese Aufgabe durch eine Weiterbildung der bekannten Verfahren gelöst, die im Wesentlichen dadurch gekennzeichnet ist, dass der fließfähige Kunststoff zur Bildung von Stegen des Mantels durch mindestens eine sich in Fließrichtung erstreckende, die radiale Weite des Ringspalts, d. h. die lichte Weite des Ringspalts in einer senkrecht zur Spaltachse verlaufenden Richtung, vergrößernde Fließrinne in Richtung auf das dem Einspritzpunkt abgewandte Ende der Kavität fließt.

Die Erfindung geht auf die Erkenntnis zurück, dass die Anforderungen an die Maßhaltigkeit und die Stabilität der durch Blasformen des Vor-Formlings hergestellten Behälters in vielen Fällen nicht erfüllt werden können, wenn im Sinne der Reduzierung der Materialmenge lediglich die Wandstärke des Vor-Formlings und/oder dessen axiale Länge reduziert wird. Bei einer Reduzierung der Wandstärke kommt es in vielen Fällen dazu, dass der fließfähige Kunststoff nicht mehr vollständig bis zu dem dem Einspritzpunkt abgewandten Ende der Kavität fließt. An diesem dem Einspritzpunkt der Kavität abgewandten Ende ist allerdings regelmäßig die Negativform eines Gewindes oder Flansches vorgesehen, der zum Erhalt eines dichten Verschlusses mit einem Verschlusselement zusammenwirkt. Wie vorstehend erläutert, bleibt dieser Verschlussbereich des Behälters beim folgenden Blasformvorgang im Wesentlichen unverändert. Wenn also der Verschlussteil des Vor-Formlings beim Spritzgießvorgang, verursacht durch eine zu geringe lichte Weite des Ringspalts nur unvollständig hergestellt wird, hat dies einen Behälter zum Ergebnis, der nicht mehr mit der erforderlichen Zuverlässigkeit dicht verschlossen werden kann. Wenn die axiale Länge des Vor-Formlings bei gleichbleibender Wandstärke reduziert wird, hat dies bei dem anschließenden Blasformvorgang in vielen Fällen eine zu starke Streckung zum Ergebnis, welche zu einer mangelhaften Behälterstabilität oder gar Undichtigkeiten führen kann.

Im Rahmen der Erfindung wurde herausgefunden, dass das Spritzgießwerkzeug bis zu dem dem Einspritzpunkt abgewandten Ende vollständig mit dem fließfähigen Kunststoff ausgefüllt werden kann, wenn nur einzelne, sich ggf. zumindest abschnittweise etwa parallel zur Spaltachse erstreckende, Fließrinnen im Bereich des Ringspalts vorgesehen sind, durch die der Kunststoff in Richtung auf das axiale Endes des Behälters fließen kann, während der Mantel des Vor-Formlings in Umfangsrichtung neben den durch die Fließrinne herausgebildeten Stegen eine geringere Wandstärke aufweisen kann. So wird einerseits durch Reduzierung der Spaltweite im Bereich außerhalb der Rinnen eine Reduzierung der zur Herstellung des Vor-Formlings benötigten Materialmenge ermöglicht. Andererseits ist es dazu nicht erforderlich, die axiale Länge des Vor-Formlings zu reduzieren, so dass es bei dem anschließenden Blasformvorgang auch nicht zu einer Materialüberdehnung kommt. Darüber hinaus kann der Blasformvorgang so ausgeführt werden, dass Reste der während des Spritzgießvorgangs herausgebildeten Stege des Vor-Formlings erhalten bleiben, welche eine stabilisierende Wirkung für den fertigen Kunststoffbehälter für Lebensmittel entfalten.Dabei hat es sich im Rahmen der Erfindung als zweckmäßig erwiesen, wenn sich mindestens eine Fließrinne über 50 Prozent oder mehr, insbesondere über die gesamte axiale Länge des Mantels des Vor-Formlings erstreckt.

Insgesamt kann so die für die Herstellung von Behältern mit vorgegebenem Volumen benötigte Materialmenge unter Gewährleistung der erforderlichen Maßhaltigkeit und Stabilität reduziert werden.

Im Rahmen der Erfindung ist auch daran gedacht, den durch Einsatz der Fließrinne gebildeten Steg als radial nach außen ragenden Steg auszuführen. Im Sinne einer Vermeidung von Beschädigungen des Vor-Formlings und/oder des Behälters bei Transport und Lagerung und zum Erhalt gewünschter haptischer Eigenschaften des Behälters hat es sich jedoch als zweckmäßig erwiesen, wenn der Ringspalt von einer der Spaltachse zugewandten und eine äußere Begrenzungsfläche des Vor-Formlings bestimmenden äußeren und einer der Spaltachse abgewandten und eine innere Begrenzungsfläche des Vor-Formlings bestimmenden inneren Formfläche begrenzt wird, wobei zwischen der äußeren Formfläche und der inneren Formfläche ein die Wandstärke des Mantels des Vor-Formlings bestimmender Abstand freigelassen ist und mindestens eine Fließrinne in der inneren Formfläche gebildet ist, so dass der Mantel einen der Fließrinne entsprechenden, in den Innenraum des Vor-Formlings ragenden Steg größerer Wandstärke erhält.

Bei Ausführungsformen der Erfindung kann der Kunststoff zum Erhalt von zwei, drei oder mehr Stegen durch zwei, drei oder mehr in Umfangsrichtung der Kavität vorzugsweise etwa äquidistant beabstandete Fließrinnen in Richtung auf das dem Einspritzpunkt entgegengesetzte Ende der Kavität fließen. So wird das vollständige Ausfüllen der Spritzgussform bei reduzierter Spaltweite außerhalb der Fließrinnen weiter gefördert.

Im Sinne einer Förderung des Fließens in Richtung auf das dem Einspritzpunkt abgewandte Ende der Kavität hat es sich als zweckmäßig erwiesen, wenn die Wandstärke des Vor-Formlings im Bereich der Stege 110 Prozent oder mehr, insbesondere 120 Prozent oder mehr aufweist. Entsprechend beträgt die radiale Weite des Ringspalts im Bereich der Fließrinnen 110 Prozent oder mehr, insbesondere 120 Prozent oder mehr der radialen Weite des Ringspalts in Umfangsrichtung neben den Fließrinnen. Diese radiale Weite des Ringspalts in Umfangsrichtung neben den Fließrinnen kann bei Ausführungsformen der Erfindung weniger als 2 mm, vorzugsweise 1,8 mm oder weniger betragen. Die radiale Weite des Ringspalts kann im Bereich der Fließrinne bei dieser Dimensionierung außerhalb der Fließrinne 2 mm oder mehr, insbesondere 2,1 mm oder mehr betragen.

Im Rahmen der Erfindung ist besonders zu beachten, dass die Wandstärke des Vor-Formlings außerhalb der durch die Fließrinnen bestimmten Stege mit zunehmender Länge des Vor-Formlings abnimmt bzw. die radiale Weite des Ringspalts der Kavität außerhalb der Fließrinnen mit zunehmender Länge des Vor-Formlings geringer wird. Daher erlangen die Fließrinnen mit zunehmender Länge des Vor-Formlings besondere Bedeutung.

Zur Reduzierung der benötigten Materialmenge hat es sich als zweckmäßig erwiesen, wenn die Wandstärke des Vor-Formlings im Bereich der Stege bzw. die radiale Weite des Ringspalts im Bereich der Fließrinnen weniger als 200 Prozent, insbesondere weniger als 150 Prozent der Wandstärke außerhalb der Stege bzw. der radialen Weite außerhalb der Fließrinnen beträgt.

Ähnlich wie bei herkömmlichen Verfahren kann der Kunststoff auch bei erfindungsgemäßen Verfahren zur Herstellung eines Vor-Formlings mit einem Gewinde in einen an dem dem Einspritzpunkt abgewandten Ende der Kavität gebildeten Gewindeabschnitt der Kavität fließen. In diesem Fall umläuft der Gewindeabschnitt eine Öffnung des Vor-Formlings, die später einer Behälter- bzw. einer Flaschenöffnung entsprechen kann. Andererseits kann der Vor-Formling im Bereich des Einspritzpunkts zur Bildung eines Behälterbodens bei einem späteren Blasformvorgang geschlossen sein. In diesem Fall wird die Einspritzöffnung zum Abschluss des Spritzgießvorgangs mit dem Kunststoff verschlossen.

Im Sinne der gewünschten Reduzierung der benötigten Materialmenge bei gleichzeitiger Sicherstellung der gewünschten Fließeigenschaften und Stabilität kann sich die mindestens eine Fließrinne in Umfangsrichtung des Ringspalts über 40 Prozent oder weniger, vorzugsweise 30 Prozent oder weniger, insbesondere 20 Prozent oder weniger der gesamten Umfangslänge der die mindestens eine Fließrinne aufweisenden Formfläche, aber über mindestens 5 Prozent, vorzugsweise über mindestens 10 Prozent der gesamten Umfangslänge dieser Formfläche erstrecken.

Wie vorstehend bereits erläutert, wird bei einem erfindungsgemäßen Verfahren zum Herstellen eines zum Aufnehmen von flüssigen oder pastösen Lebensmitteln ausgelegten Kunststoff-Behälters ein mit einem erfindungsgemäßen Verfahren hergestellter Vor-Formling einem Blasformvorgang unterzogen. Dabei kann der Gewindeabschnitt des Vor-Formlings bei dem Blasformvorgang im Wesentlichen unverändert bleiben. Der Mantel des Vor-Formlings kann bei dem Blasformvorgang mindestens auf das Doppelte der ursprünglichen axialen Länge gestreckt werden, aber zur Vermeidung von Überstreckungen zweckmäßigerweise auf weniger als das Vierfache, insbesondere weniger als das Dreifache der ursprünglichen axialen Länge des Mantels des Vor-Formlings.

Ein erfindungsgemäßes Spritzgießwerkzeug zum Ausführen eines erfindungsgemäßen Verfahrens weist eine von einer äußeren Formfläche und einer inneren Formfläche begrenzte Kavität auf, wobei zwischen der inneren Formfläche und der äußeren Formfläche ein die Wandstärke eines Mantels des Vor-Formlings bestimmender Abstand freigelassen ist und mindestens eine Fließrinne in der inneren und/oder äußeren Formfläche gebildet ist.

Ein mit einem erfindungsgemäßen Verfahren hergestellter Vor-Formling weist einen Mantel mit mindestens einem im Wesentlichen in axialer Richtung des Mantels verlaufenden Steg vergrößerter Wandstärke auf.

Bei Einsatz erfindungsgemäßer Verfahren kann die zum Herstellen von Behältern mit vorgegebenen Volumen benötigte Materialmenge ohne Beeinträchtigung der Maßhaltigkeit des Behälters und/oder der Behälterstabilität um mehr als 10 Prozent reduziert werden.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich Bezug genommen wird, erläutert. In der Zeichnung zeigt:
- Fig. 1: eine Axialschnittdarstellung eines erfindungsgemäßen Vor-Formlings,
- Fig. 2: eine Radialschnittdarstellung des Vor-Formlings gemäß Fig. 1 längs der in Fig. 1 angegebenen Schnittebene E-E.

Der in der Zeichnung dargestellte Vor-Formling wird durch Spritzgießen von Polyethylenterephthalat (PET) bei einer Temperatur von etwa 220 °C hergestellt. Er umfasst einen Gewindeabschnitt 20 und einen insgesamt mit 30 bezeichneten Mantel. Der Mantel 30 wird auf seiner dem Gewindeabschnitt 20 entgegengesetzten Seite von einem geschlossenen Boden 32 abgeschlossen. Der Gewindeabschnitt 20 umläuft eine Öffnung 22 des Vor-Formlings.

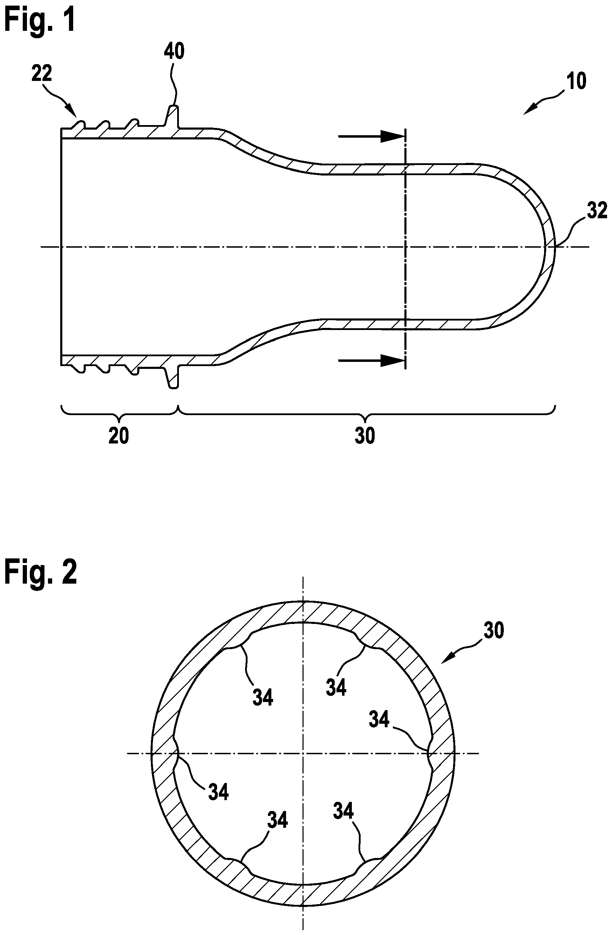

Zum Herstellen des in Fig. 1 dargestellten Vor-Formlings wird PET durch eine Einspritzöffnung im Bereich eines dem Boden 32 entsprechenden Endes eines Spritzgießwerkzeugs eingespritzt und fließt in Richtung auf den dem Gewindeabschnitt 20 entsprechenden Bereich des Spritzgießwerkzeugs. Zwischen dem Mantelbereich 30 und dem Gewindeabschnitt 20 ist ein radial abstehender, umlaufender Steg 40 vorgesehen. Das eingespritzte Kunststoffmaterial muss sowohl in den dem Steg 40 entsprechenden Bereich der Spritzgießform als auch in den dem Gewindeabschnitt 20 entsprechenden Bereich der Spritzgießform fließen. Wenn die Wandstärke des Mantelbereichs 30 bei einer Länge des Mantelbereichs von mehr als 50 mm auf einen Wert von weniger als 2 mm eingestellt wird, wie in der Schnittdarstellung gemäß Fig. 1 angedeutet, kann der Fließwiderstand für den Kunststoff so groß werden, dass es nicht zu einer zuverlässigen Befüllung des Spritzgießwerkzeugs im Bereich des Stegs 40 und des Gewindes 20 kommt.

Wie in Fig. 2 bei 34 angedeutet, wird dieser Mangel durch Bereitstellung von Fließrinnen in der inneren Formfläche des Spritzgießwerkzeugs bereitgestellt, welche zur Ausbildung von radial nach innen ragenden Stegen 34 im Mantelbereich 30 führen und sich über im Wesentlichen die gesamte axiale Länge des Mantelbereichs erstrecken. Im Bereich der Stege 34 weist der Mantelbereich eine Wandstärke von mehr als 2 mm auf. Es hat sich gezeigt, dass durch die lokal begrenzte Vergrößerung der Wandstärke des Mantelbereichs eine hinreichende Reduzierung des Fließwiderstands für den in das Spritzgießwerkzeug einfließenden Kunststoff erreicht wird. So kann, auch wenn die Wandstärke des Mantelbereichs außerhalb der Stege 34 weniger als 2 mm beträgt, eine zuverlässige Befüllung des Spritzgießwerkzeugs im Bereich des umlaufenden Stegs 40 und des Gewindeabschnitts 20 erfolgen.

Bei der in der Zeichnung dargestellten Ausführungsform der Erfindung sind insgesamt sechs Stege mit vergrößerter Wandstärke vorgesehen. In Umfangsrichtung erstrecken sich die Stege insgesamt über weniger als 20 Prozent der gesamten Umfangslänge der inneren Formfläche bzw. der inneren Begrenzungsfläche des Vor-Formlings. So wird durch Bereitstellen der Stege ein geringerer Materialverbrauch verursacht, wobei durch die Querschnittsvergrößerung im Bereich der Stege 34 dennoch eine ausreichende Reduzierung des Fließwiderstands erfolgt.

Die Stege sind bei der in der Zeichnung dargestellten Ausführungsform der Erfindung in Umfangsrichtung äquidistant voneinander beabstandet und erstrecken sich etwa parallel zur Längsachse des Mantelbereichs. Der Wandbereich ist etwa kreiszylindermantelförmig ausgeführt, wobei sich der Durchmesser in Richtung auf den Gewindebereich 20 vergrößert. Bei anderen Ausführungsformen der Erfindung können mehr als sechs oder weniger als sechs Stege vorgesehen sein. Der Mantelbereich des Vor-Formlings kann auch in einer Radialschnittebene polygonal ausgeführt sein. Es ist auch daran gedacht, den Vor-Formling aus anderen Materialien herzustellen.

Zur Fertigstellung eines Lebensmittelbehälters aus Kunststoff wird der Vor-Formling 10 derart in ein Blasformwerkzeug eingesetzt, dass der Mantelbereich 30 auf eine Temperatur von 100 °C oder mehr erwärmt werden kann. Durch Einleiten eines Fluids durch die von dem Gewinde 22 umlaufene Öffnung wird der Mantelbereich sowohl in axialer Richtung als auch in Umfangsrichtung gestreckt, bis er sich an eine innere Begrenzungsfläche des Blasformwerkzeugs anlegt. Der Gewindebereich 20 bleibt dabei im Wesentlichen unverändert. Der Blasformvorgang kann dadurch unterstützt werden, dass durch die vom Gewindebereich 20 umlaufende Öffnung 22 ein Werkzeug in den Vor-Formling eingeführt wird, welches den Streckvorgang in axialer Richtung unterstützt.

Nach dem Blasformvorgang können Reste der Stege 34 in dem fertigen Behälter bestehen bleiben. Durch diese lokalen Verdickungen der Wand wird die Stabilität des Behälters erhöht.

Vorstehend wurde die Erfindung am Beispiel von Vor-Formlingen aus Polyethylenterephthalat (PET) erläutert. Die Verarbeitungstemperatur von PET beim Spritzgießvorgang beträgt etwa 250 °C bis 320 °C. Während des Blasformvorgangs beträgt die Verarbeitungstemperatur etwa 100 °C bis 130 °C.

Bei anderen Ausführungsformen der Erfindung kann der Vor-Formling auch aus Polystyrol (PS) hergestellt werden. Die Verarbeitungstemperatur von PS während des Spritzgießvorgangs beträgt etwa 220 °C bis 300 °C. Während des Blasformvorgangs beträgt die Verarbeitungstemperatur von PS ebenso wie bei Einsatz von PET etwa 100 °C bis 130 °C.

## Patentansprüche

1. Verfahren zum Herstellen eines Formlings (10) für einen zum Aufnehmen von flüssigen oder pastösen Lebensmittels ausgelegten Kunststoff-Behälter, insbesondere Kunststoff-Flasche, bei dem fließfähiger Kunststoff, wie etwa erwärmtes PET und/oder erwärmtes PS, in eine die Form eines einen umlaufenden Mantel (30) aufweisenden Vor-Formlings (10) bestimmende Kavität eines Spritzgießwerkzeugs eingespritzt wird und in der Kavität von einem Einspritzpunkt des Spritzgießwerkzeugs in einer Fließrichtung durch einen die Form des Mantels bestimmenden, eine Spaltachse umlaufenden Ringspalt zu einem dem Einspritzpunkt entgegengesetzten Ende der Kavität fließt, **dadurch gekennzeichnet, dass** der fließfähige Kunststoff zur Bildung von Stegen (34) des Mantels (30) durch mindestens eine sich in Fließrichtung erstreckende, die radiale Weite des Ringspalts lokal vergrößernde Fließrinne in Richtung auf das dem Einspritzpunkt abgewandte Ende der Kavität fließt, wobei sich die mindestens eine Fließrinne vorzugsweise über 50 Prozent oder mehr der axialen Länge des Mantels (30), insbesondere über im Wesentlichen die gesamte axiale Länge des Mantels (30) erstreckt.

2. Verfahren nach Anspruch 1, **dadurch gekennzeichnet, dass** der Ringspalt von einer der Spaltachse zugewandten und eine äußere Begrenzungsfläche des Vor-Formlings bestimmenden äußeren, und einer der Spaltachse abgewandten und eine innere Begrenzungsfläche des Vor-Formlings bestimmenden inneren Formfläche begrenzt ist, wobei zwischen der äußeren Formfläche und der inneren Formfläche ein die Wandstärke des Mantels (30) bestimmender Abstand freigelassen ist und mindestens eine Fließrinne in der inneren Formfläche gebildet ist, so dass der Mantel (30) einen der Fließrinne entsprechenden, in den Innenraum des Vor-Formlings ragenden Steg (34) größerer Wandstärke erhält.

3. Verfahren nach Anspruch 2, **dadurch gekennzeichnet, dass** der Kunststoff zum Erhalt von zwei, drei oder mehr Stegen durch zwei, drei oder mehr in Umfangsrichtung der Kavität vorzugsweise etwa äquidistant beabstandete Fließrinnen in Richtung auf das dem Einspritzpunkt entgegengesetzte Ende der Kavität fließt.

4. Verfahren nach einem der vorhergehenden Ansprüche, **dadurch gekennzeichnet, dass** die Wandstärke im Bereich der Stege 110 Prozent oder mehr, insbesondere 120 Prozent oder mehr, aber weniger als 200 Prozent, insbesondere weniger als 150 Prozent der Wandstärke außerhalb der Stege beträgt.

5. Verfahren nach einem der vorgehenden Ansprüche, **dadurch gekennzeichnet, dass** der Kunststoff zur Herstellung eines Vor-Formlings mit einem Flaschengewinde (20) in einen an dem Einspritzpunkt entgegengesetzten Ende der Kavität gebildeten Gewindeabschnitt der Kavität fließt.

6. Verfahren nach einem der vorhergehenden Ansprüche, **dadurch gekennzeichnet, dass** der Vor-Formling (10) im Bereich des Einspritzpunkts zur Bildung eines Behälterbodens nach einem Blasformvorgang geschlossen ist.

7. Verfahren nach einem der vorhergehenden Ansprüche, **dadurch gekennzeichnet, dass** sich die mindestens eine Fließrinne in Richtung des Ringspalts über 40 Prozent oder weniger, vorzugsweise 30 Prozent oder weniger, insbesondere 20 Prozent oder weniger, der gesamten Umfangslänge der die mindestens eine Fließrinne aufweisenden Formfläche, aber über mindestens 5 Prozent, vorzugsweise über mindestens 10 Prozent der gesamten Umfangslänge dieser Formfläche erstreckt.

8. Verfahren zum Herstellen eines zum Aufnehmen von flüssigen oder pastösen Lebensmitteln ausgelegten Kunststoff-Behälters, insbesondere einer Kunststoff-Flasche, bei dem ein mit einem Verfahren nach einem der vorhergehenden Ansprüche hergestellter Vor-Formling einem Blasformvorgang unterzogen wird.

9. Verfahren nach Anspruch 8, **dadurch gekennzeichnet, dass** der Gewindeabschnitt des Vor-Formlings bei dem Blasvorgang im Wesentlichen unverändert bleibt.

10. Verfahren nach Anspruch 8 oder 9, **dadurch gekennzeichnet, dass** der Mantel des Vor-Formlings bei dem Blasformvorgang mindestens auf das Doppelte der ursprünglichen axialen Länge gestreckt wird, aber auf weniger als das Vierfache, insbesondere weniger als das Dreifache.

11. Spritzgießwerkzeug zum Ausführen eines Verfahrens nach einem der vorhergehenden Ansprüche.

12. Vor-Formling, hergestellt mit einem Verfahren nach einem der Ansprüche 1 bis 7.
